# EUROPÄISCHE PATENTSCHRIFT

(11) **EP 0 542 808 B1**
(45) Veröffentlichungstag und Bekanntmachung des Hinweises auf die Patenterteilung: **04.01.1995**
(21) Anmeldenummer: 91914060.8
(22) Anmeldetag: 29.07.1991
(51) Int. Cl.: C09K 7/06, C09K 7/02, B01F 17/00

(54) **VERWENDUNG OBERFLÄCHENAKTIVER ESTERSULFONAT-SALZE IN WASSER- UND ÖL-BASIERTEN BOHRSPÜLUNGEN UND ANDEREN BOHRLOCHBEHANDLUNGSMITTELN**
USE OF SURFACE-ACTIVE ESTER SULPHONATE SALTS IN WATER-BASED AND OIL-BASED BORE-FLUSHING AGENTS AND OTHER OIL-WELL DRILLING FLUIDS
UTILISATION DE SELS TENSIO-ACTIFS DE SULFONATE D'ESTER DANS DES SOLUTIONS DE CURAGE ET DANS D'AUTRES AGENTS DE TRAITEMENT DE PUITS DE FORAGE A BASE D'EAU ET D'HUILE

(30) Priorität: 06.08.1990 DE 4024892
(43) Veröffentlichungstag der Anmeldung: 26.05.1993
(73) Patentinhaber: Henkel Kommanditgesellschaft auf Aktien, 40191 Düsseldorf (DE)
(72) Erfinder: MÜLLER, Heinz, D-4019 Monheim (DE); HEROLD, Claus-Peter, D-4020 Mettmann (DE); WANGEMANN, Frank, D-4020 Mettmann (DE); VON TAPAVICZA, Stephan, D-4006 Erkrath (DE)
(86) Internationale Anmeldenummer: EP9101421
(87) Internationale Veröffentlichungsnummer: WO9202595

(56) Entgegenhaltungen:
- EP-A- 0 334 199
- EP-A- 0 374 672
- EP-A- 0 386 636
- EP-A- 0 386 638
- WO-A-91/04963
- J. AM. OIL. CHEM. SOC., Bd. 52, 1975, Seiten 323-329; W. STEIN, H. BAUMANN: "ALPHA-SUFONATED FATTY ACIDS AND ESTERS: MANUFACT. PROCESS, PROPERTIES, AND APP"

## Beschreibung

Die Erfindung betrifft die Verwendung ausgewählter Emulgatoren mit erhöhter ökologischer Verträglichkeit für die Herstellung von fließfähigen dispersen Systemen, die entweder als W/O-Invert-Emulsionen mit geschlossener Ölphase oder als wäßrige Emulsionen mit disperser Ölphase vorliegen und für den technischen Einsatz im Rahmen von fließfähigen Bohrlochbehandlungsmitteln geeignet sind. Als charakteristisches Beispiel für Mittel dieser Art wird im nachfolgenden die Erfindung anhand von Öl-basierten bzw. Wasser-basierten Bohrspülflüssigkeiten und darauf aufgebauten Bohrspülschlämmen beschrieben. Das Anwendungsgebiet der erfindungsgemäßen Abwandlung von Hilfsflüssigkeiten der hier betroffenen Art ist jedoch nicht darauf beschränkt. In Betracht kommen insbesondere auch die Gebiete der Spotting Fluids, Spacer, Hilfsflüssigkeiten für Workover und Stimulierung und für das Fracturing.

Die Erfindung geht dabei insbesondere von der Aufgabe aus, die ökologische Verträglichkeit dieser heute weltweit in großtechnischem Einsatz befindlichen Hilfsmittel dadurch substantiell zu beeinflussen, daß ausgewählte und insbesondere ökologisch unbedenkliche Emulgatortypen zum Einsatz kommen. Die Erfindung will in ihrer bevorzugten Ausführungsform diese biologisch unbedenklichen Emulgatoren gleichzeitig mit Öl-phasen erhöhter Umweltverträglichkeit und insbesondere biologischer Abbaubarkeit verwenden.

### Zum allgemeinen Stand der Technik

Auf dem Gebiet flüssiger Spülsysteme zur Niederbringung von Gesteinsbohrungen unter Aufbringen des abgelösten Bohrkleins haben heute die sogenannten Invert-Bohrspulschlämme hervorragende Bedeutung, die auf der Basis von W/O-Emulsionen eine disperse wäßrige Phase in der geschlossenen Ölphase enthalten. Der Gehalt an disperser wäßriger Phase liegt üblicherweise im Bereich von etwa 5 bis 50 Gew.-%.

Bekannt sind aber auch Wasser-basierte Bohrspülungen mit einer emulgierten dispersen Ölphase (O/W-Typ), deren Ölgehalt von einigen Prozent bis etwa 50 Gew.-% reichen kann. O/W-Emulsionsspülungen dieser Art zeigen eine Reihe beträchtlicher Vorteile gegenüber rein Wasserbasierten Spülungstypen.

Zur Stabilisierung der jeweils gewählten Dispersionsform bedarf es des Einsatzes entsprechender Emulgatoren entweder vom W/O-Typ (Invert-Spülungen) bzw. vom O/W-Typ (Emulsionsspülungen). Zur einschlägigen Fachliteratur wird beispielsweise verwiesen auf G. R. Gray, H.C.H. Darley "Composition in Properties of Oil Well Drilling Fluids" 4. Auflage, Gulf Publishing Co., Houston London, 1981 insbesondere Seiten 51, 64 und 320 ff.

Die Ölphasen von Bohrspülungen der hier geschilderten Art und vergleichsweise aufgebauten anderen Bohrlochbehandlungsmitteln werden in der Praxis heute nahezu ausschließlich durch Mineralölfraktionen gebildet. Damit ist eine nicht unbeträchtliche Belastung der Umwelt verbunden, wenn beispielsweise die Bohrschlämme unmittelbar oder über das erbohrte Gestein in die Umwelt gelangen. Mineralöle sind nur schwer und anaerob praktisch nicht abbaubar und damit als langfristige Verschmutzung anzusehen. Wenn diese Ölphasen auch als der Hauptbestandteil oder wenigstens substantieller Anteil der Bohrspülung für ökologische Überlegungen ein wichtiger Ansatzpunkt sind, so muß doch auch den anderen Komponenten solcher Mehrstoffgemische entsprechende Aufmerksamkeit gewidmet werden. Besondere Bedeutung kommt hier den Emulgatoren zu. Bestimmungsgemäß sind Verbindungen dieser Art schon in geringer Konzentration hochaktive Wirkstoffe, die bekanntlich zur intensiven Interaktion mit dem pflanzlichen oder tierischen Organismus befähigt sind.

### Die Aufgabe der Erfindung

Die vorliegende Erfindung geht von der Aufgabe aus, Arbeitsmittel der beschriebenen Art auf Basis von geschlossenen oder dispersen Ölphasen in Abmischung mit wäßrigen Phasen unter Berücksichtigung ihrer ökologischen Vertraglichkeit substantiell gegenüber heute üblichen Arbeitsmitteln dieser Art zu verbessern. Die Erfindung will dabei insbesondere für das hier betroffene Einsatzgebiet Emulgatoren bzw. Emulgatorkomponenten vorschlagen, die an sich bekannt und dabei als in hohem Maße umweltverträglich beschrieben sind, für das hier betroffene Arbeitsgebiet aber noch keine Verwendung gefunden haben. In der bevorzugten Ausgestaltung der Erfindung sollen diese umweltverträglichen Emulgatoren vom W/O-Typ bzw. vom O/W-Typ zusammen mit Öl/Wasser-Phasen zum Einsatz kommen, in denen die Ölphasen ihrerseits erhöhte ökologische Verträglichkeit besitzen und insbesondere durch natürliche Abbaumechanismen umweltschonend abgebaut werden können.

### Zur Lösung der erfindungsgemäßen Aufgabe

Zur Lösung der ersten Teilaufgabe schlägt die Erfindung vor, als ökologisch verträgliche bzw. unbedenkliche Verbindungen mit Emulgatorwirkung an sich bekannte oberflächenaktive Estersulfonat-Salze der nachfolgend beschriebenen Art einzusetzen, die bekanntlich je nach ihrer Konstitution und der Interaktion mit dem umgebenden System als W/O-Emulgatoren oder als O/W-Emulgatoren einzustufen sind.

Gegenstand der Erfindung ist dementsprechend in einer ersten Ausführungsform die Verwendung oberflächenaktiver Salze innenständig sulfonierter und wenigstens überwiegend organisch gebundenen Schwefel aufweisender Ester aus ein- und/oder mehrfach olefinisch ungesättigten Carbonsäuren mit wenigstens 8 C-Atomen und niederen ein- und/oder mehrwertigen Alkoholen (Estersulfonatsalzen) als ökologisch verträgliche Emulgatoren vom W/O-Typ und/oder O/W-Typ in fließ- und pumpfähigen Bohrspülungen oder anderen fließfähigen Bohrlochbehandlungsmitteln, die zusammen mit einer wäßrigen Phase eine geschlossene oder disperse Ölphase aufweisen und für die umweltschonende Erschließung biologischer Lagerstätten, beispielsweise von Erdöl- bzw. Erdgasvorkommen geeignet sind.

Besondere Bedeutung haben in diesem Zusammenhang entsprechende Invert-Bohrspülungen, die in einer geschlossenen Ölphase eine disperse wäßrige Phase zusammen mit Emulgatoren übliche weitere Hilfsstoffe, wie Verdickungsmittel, fluid-loss-Additive, Beschwerungsmittel, lösliche Salze und/oder Alkalireserven enthalten. Erfindungsgemäß ist in dieser Ausführungsform der Einsatz von ausgewählten oberflächenaktiven Estersulfonat-Salzen als Emulgator oder wenigstens Bestandteil eines ökologisch verträglichen Emulgatorsystems vorgesehen.

Bevorzugt werden dabei diese Emulgatoren auf Basis oberflächenaktiver Estersulfonat-Salze zusammen mit umweltverträglichen Esterolen, oleophilen Alkoholen und/oder entsprechenden Ethern als geschlossene bzw. disperse Ölphase eingesetzt. Zu verweisen ist hier insbesondere auf einschlägige Entwicklungen der Anmelderin, die in einer größeren Zahl älterer Patentanmeldungen Vorschläge zum Austausch der bisher üblichen Mineralölfraktionen gegen ökologisch verträgliche leicht abbaubare Ölphasen beschreibt. Dabei werden unterschiedliche Typen von Austauschölen dargestellt, die auch in Mischung miteinander eingesetzt werden können. Es handelt sich hierbei um ausgewählte oleophile Monocarbonsäureester, ausgewählte Polycarbonsäureester, um wenigstens weitgehend wasserunlösliche und unter Arbeitsbedingungen fließfähige Alkohole, um entsprechende Ether sowie um ausgewählte Kohlensäureester. Summarisch wird hier verwiesen auf die älteren Anmeldungen P 38 42 659.5 (D 8523), P 38 42 703.6 (D 8524), P 39 07 391.2 (D 8506), P 39 07 392.0 (D 8607), P 39 03 785.1 (D 8543), P 39 03 784.3 (D 8549), P 39 11 238.1 (D 8511), P 39 11 299.3 (D 8539), P 40 18 228.2 (D 9167) und P 40 19 266.0 (D 9185). Alle hier genannten älteren Anmeldungen betreffen das Gebiet Öl-basierter Bohrspülsysteme, insbesondere vom W/O-Inverttyp. Wasserbasierte Emulsionsspülungen unter Verwendung von diesen Ölphasen erhöhter Abbaubarkeit werden beschrieben in den älteren Anmeldungen P 39 15 876.4 (D 8704), P 39 15 875.6 (D 8705), P 39 16 550.7 (D 8714) und den bereits genannten Anmeldungen P 40 18 228.2 (D 9167) und P 40 19 266.0 (D 9185).

In ihrer wichtigstens Ausführungsform erfaßt die Erfindung die gemeinsame Verwendung der zuvor geschilderten Emulgatoren aus der Klasse der oberflächenaktiven Estersulfonat-Salze zusammen mit dispersen oder geschlossenen Ölphasen der zuletzt geschildert Art. Die Offenbarung der genannten älteren Anmeldungen wird hiermit ausdrücklich zum Gegenstand der Erfindungsoffenbarung gemacht.

### Einzelheiten zur erfindungsgemäßen Lehre auf dem Hintergrund des speziellen Fachwissens

Die Sulfierung ungesättigter Carbonsäuren natürlichen oder synthetischen Ursprungs sowie ihrer Ester mit 1- und/oder mehrfunktionellen Alkoholen ist seit langem bekannt. Hierbei erfaßt der als Oberbegriff zu wertende Begriff der Sulfierung in der präzisen chemischen Definition der eintretenden Reaktion bzw. der entstehenden Reaktionsprodukte zwei unterschiedliche Möglichkeiten, die auch nebeneinander auftreten können. Die erste dieser Möglichkeiten ist in der chemischen Definition als Sulfatierung zu beschreiben, in der Schwefelsäureestergruppen gebildet werden, die den Schwefel über ein Sauerstoffatom an Kohlenstoff gebunden enthalten. Diese Sulfatierungsprodukte entstehen beispielsweise durch Addition des Schwefelsäurerestes an die olefinische Doppelbindung ungesättigter Carbonsäuremoleküle oder durch eine Veresterung vorliegender freier Hydroxylgruppen am C-Gerüst.

Hiervon zu unterscheiden ist die Sulfonierung. Charakteristisch für diese Reaktion ist die Anbindung organisch gebundenen Schwefels an das C-Gerüst unter Ausbildung untermittelbarer C-S-Bindungen. Die Lehre der Erfindung beschäftigt sich mit Emulgatoren der geschilderten Art, die wenigstens überwiegend echte Sulfonate im zuletzt geschilderten Sinne, also mit unmittelbar organisch gebundenem Schwefel im Molekül sind.

Trotz dieser konstitutionsmäßig klaren Unterschiede, die sich auch im chemischen Verhalten, beispielsweise in der Hydrolysestabilität der jeweiligen Verbindungsklassen deutlich unterscheiden, ist der in der Praxis übliche Sprachgebrauch unscharf. Die einschlägige Literatur redet häufig von Sulfonaten, wenn in Wirklichkeit Sulfate beschrieben werden sollen. So wird beispielsweise von Sulfonierungsprodukten gesprochen, die gegen Säuren und Alkalien relativ wenig beständig sind, da neben der Bildung echter Sulfonsäuren vor allem instabile Schwefelsäureester gebildet werden, siehe hierzu beispielsweise DE 12 46 717 und die zusammenfassende Darstellung H. L. Sanders "Sulfoils - The Resurgent Surfactants", SOAP/COSMETICS/CHEMICAL SPECIALTIES, Mai 1975, 39/40. Auch auf dem Gebiet der durch die Erfindung betroffenen Bohrspülsysteme, insbesondere der sogenannten Invert-Spülungen wird häufig diese sprachlich unpräzise Definition gewählt, vergleiche hierzu beispielsweise die US 3,642,623, Spalte 6, 26 bis 28. Die Herstellung echter Sulfonate mit überwiegend organisch gebundenem Schwefel aus Estern ungesättigter Carbonsäuren, insbesondere entsprechender ungesättigter Fettsäuren mit 1- und/oder mehrwertigen Alkoholen ist seit langem bekannt. Verwiesen sei beispielsweise auf die bereits zitierte DE 12 46 717 und die DE-A1 34 37 443. So können beispielsweise aus ungesättigten Ölen natürlichen und dabei pflanzlichen und/oder tierischen Ursprungs echte Sulfonate unter vergleichsweise milden Arbeitsbedingungen erhalten werden, wenn zur Sulfierung stark verdünnte Schwefeltrioxid/Luft-Gemische eingesetzt werden. Durch nachfolgende Neutralisation werden gut elektrolytbeständige wasserlösliche Verbindungen erhalten, die als lagerbeständige, säure- und alkalifeste Emulgatoren beschrieben worden sind. Technische Einsatzgebiete sind beispielsweise die Herstellung von Lederfettungsmitteln, Schmelzmittel für die Textilindustrie, die Herstellung von Metallbearbeitungsölen sowie die Erzeugung elektrolytbeständiger Emulsionen für die verschiedensten Anwendungszwecke. Im einzelnen vergleiche hierzu die bereits zitierte Literatur.

Estersulfonate der erfindungsgemäßen Definition und insbesondere ihre Kombination mit ökologisch verträglichen Ölphasen erhöhter Abbaubarkeit sind für das Einsatzgebiet der durch die Erfindung betroffenen Bohrlochbehandlungsmittel bisher nicht vorgeschlagen worden.

Die Klasse der sogenannten Fettsäuresulfonate im eingangs angegebenen breiten Wortsinne spielt als Emulgatorkomponente beim Aufbau von O/W- und W/O-Emulsionen für das Gebiet der Bohrspülungen und Bohrlochbehandlungsmittel in Praxis und Literatur durchaus eine bedeutende Rolle. Beschrieben werden hier allerdings primär die entsprechenden Sulfierungsprodukte ungesättigter Carbonsäuren, nicht aber ihrer Ester im Sinne der erfindungsgemäßen Definition. Darüber hinaus spielen Sulfonate anderer Konstitution eine beträchtliche Rolle, bei denen insbesondere die Sulfogruppierung über aromatische Molekülbestandteile in das Emulgatormolekül eingeführt worden ist. Verbindungen dieser Art vertragen sich nicht mit der erfindungsgemäßen Zielsetzung erhöhter ökologischer Verträglichkeit. Aus dem umfangreichen druckschriftlichen Stand der Technik sei auszugsweise verwiesen auf die DE 12 45 289 und die USen 3,476,912; 4,012,329; 3,899,431; 3,340,188; 3,878,111 und die bereits zitierte 3,642,623. Genannt sind in diesen Druckschriften unter anderem Petroleumsulfonate, Tallölpechsulfonate, Kombinationen von Natriumölsäuresulfonat und Titanaten und weitere Kombinationssysteme.

In der Praxis insbesondere Wasser-basierter Spülsysteme und vergleichbarer Flüssigphasen spielt das sogenannte Türkischrot-Öl als Emulgatorbestandteil eine beträchtliche Rolle. Hierbei handelt es sich bekanntlich um ein sulfatiertes Öl auf Basis von Rizinusöl, vergleiche hierzu im einzelnen beispielsweise Römpp Chemie-Lexikon, 7. Auflage (1977) 3707.

Die Lehre der Erfindung sieht demgegenüber die Verwendung oberflächenaktiver Salze innenständig sulfonierter und wenigstens überwiegend organisch gebundenen Schwefel aufweisender Ester aus 1 - und/oder mehrfach olefinsch ungesättigten Carbonsäuren mit wenigstens 8 C-Atomen und niederen 1- und/oder mehrwertigen Alkoholen als ökologisch verträgliche Emulgatoren vom W/O-Typ bzw. O/W-Typ vor. Gegenüber den Salzen in entsprechender Weise innenständig unter Ausbildung von C-S-Bindungen sulfonierter ungesättigter Carbonsäuren bzw. ihren Salzen zeichnet sich die erfindungsgemäß vorgeschlagene Stoffklasse durch die zusätzliche Esterbindung und damit den in das Molekül eingebundenen Alkoholrest aus. Die freie Carbonsäuregruppe ist, damit der unmittelbaren Salzbildung entzogen, Gleichzeitig ermöglicht der jeweils vorgegebene Alkoholrest eine sehr weitgehende Variation des Grundmoleküls. In Verbindung mit der Möglichkeit der gezielten Steuerung des Sulfonierungsgrades, auf die nachgehend noch eingegangen wird, eröffnet sich damit die Möglichkeit der Synthese von Emulgatormolekülen einer möglichen breiten Verteilung des Verhältnisses von lipophilen zu hydrophilen Stoffeigenschaften. In Verbindungen mit weiteren später noch zu erörternden Variationsmöglichkeiten erschließt sich damit die Möglichkeit zu gezieltem technisch verbessertem Handeln, ohne die ökologischen Vorteile der hier betroffenen Emulgatorklasse aufgeben zu müssen. Die Lehre der Erfindung ermöglicht damit beispielsweise die nachhaltige Stabilisierung von Öl-basierten W/O-Invert-Emulsionen unter Verzicht auf die heute in weitem Umfang üblichen N-haltigen Emulgatorsysteme, deren Verträglichkeit gerade im besonders empfindlichen marinen Ökosystem nicht unumstritten ist.

### Die erfindungsgemäß einzusetzenden Estersulfonat-Salze

Für den erfindungsgemäßen Einsatzzweck bevorzugte Estersulfonat-Salze leiten sich von ungesättigten Monocarbonsäuren natürlichen und/oder synthetischen Ursprungs mit 10 bis 40 C-Atomen und vorzugsweise des Bereichs C₁₂₋₃₂ ab.

Preiswerte und in großer Menge zur Verfügung stehende Ausgangsmaterialien können entsprechende Fettsäureglycerinester natürlicher Herkunft sein. Der überwiegende Anteil der hier vorgegebenen Carbonsäurereste liegt im Bereich entsprechender Fettsäuren mit 16 bis 24 C-Atomen und 1 bis 5 Doppelbindungen. Beispiele für solche Esteröle natürlichen Ursprungs sind Fettsäureglycerinester, insbesondere die entsprechenden Triglyceride auf Basis von Korianderöl, Chaulmograaöl, Sonnenblumenöl, Baumwollsaatöl, Olivenöl, Erdnußöl, Leinöl, Lardöl, Meadowfoamöl, Schweineschmalz oder Fischöl. Besondere Bedeutung kommt dem neuen ölsäurereichen Rüböl als Einsatzmaterial für die Herstellung der erfindungsgemäß zu verwendenden sulfonierten Fettsäureester zu. Es können dabei bestimmte ausgewählte Triglyceride als auch beliebige Mischungen unterschiedlichen Ursprungs miteinander eingesetzt werden. Auch Abmischungen von natürlichen und synthetischen Estern sind möglich.

Der Begriff der Fettsäureglycerinester umfaßt dabei die Mono-, Di- und Triester sowie deren Gemische, wie sie bei der Herstellung durch Veresterung von 1 Mol Glycerin mit 1 bis 3 Mol Fettsäure bzw. Fettsäuregemisch oder bei der Umesterung von ungesattigten Trigiyceriden mit insbesondere 0,3 bis 2 Mol Glycerin erhalten werden können. Der Begriff der ungesättigten Fettsäureester bzw. der daraus gewonnenen Sulfonate erfaßt ausdrücklich auch solche nativen und/oder synthetischen Ester bzw. Estergemische, deren Fettsäurekomponente sich nicht vollständig, sondern nur anteilsweise aus ungesättigten Fettsäuren aufbaut. Erfaßt wird weiterhin der Bereich von Gemischen, insbesondere in der Praxis anfallender technischer Gemische verschiedener ungesättigter oder weitgehend ungesättigter Fettsäureglycerinester untereinander. In allen diesen Fällen ist bevorzugt, daß im Ester bzw. Estergemisch der Anteil der 1- und/oder mehrfach ungesättigten Carbonsäuren wenigstens etwa 50 Mol-% - bezogen auf Carbonsäuregemisch - ausmacht. Die Mitverwendung gesättigter Fettsäuren in untergeordneten oder höchstens mengengleichen Anteilen wird von der Lehre der Erfindung ausdrücklich erfaßt.

Als esterbildende Alkoholkomponente liegen insbesondere die Reste von 1- bis 4-wertigen Alkoholen mit vorzugsweise bis zu 5 C-Atomen vor. Wichtige Ester können sich dementsprechend von Methanol, Ethanol, gewünschtenfalls aber auch höheren Alkoholen ableiten. So kann es sich gerade bei dem Einsatz von sulfonierten Estern monofunktioneller Alkohole aus später noch zu diskutierenden Gründen als zweckmäßig erweisen, so hinreichend schwerflüchtige Alkoholkomponenten einzusetzen, daß bei einer potentiellen Esterspaltung im Betrieb durch den frei werdenden Alkohol keine inhalations-toxischen Gefährdungen ausgelöst werden. Der später noch in Zusammenhang mit Esterölen auf Basis monofunktioneller Alkohole diskutierte Gesichtspunkt hat im Zusammenhang mit den Emulgatoren allerdings geringere Bedeutung. Diese Emulgatorkomponenten werden ohnehin nur in vergleichsweise beschränkter Menge eingesetzt, so daß entsprechende Gefährdungen von vorneherein weniger bedeutungsvoll sind. Der Gesichtspunkt einer potentiellen inhalationstoxikologischen Gefährdung scheidet bei dem Einsatz von Estern auf Basis polyfunktioneller Alkohole aufgrund ihrer geringen Flüchtigkeit aus. Hier kommen also Diole wie Ethylenglykol, 1,2- bzw. 1,3-Propandiol oder entsprechende Butandiole in Betracht. Besondere Bedeutung kommt allerdings dem bereits zitierten Glycerin als esterbildende polyfunktionelle Alkoholkomponente zu.

Insbesondere im Fall solcher Ester auf Basis mehrfunktioneller Alkohole ist die Möglichkeit gegeben, nur einen oder mehrere bzw. alle der am Alkoholmolekül vorliegenden Carbonsäurereste durch Einführung der Sulfogruppe zu modifizieren. In an sich bekannter Weise wird der hydrophile Strukturcharakter um so stärker ausgeprägt, je größer die Zahl der Sulfonatgruppen pro Estermolekül gewählt ist. Zu berücksichtigen ist das insbesondere auch beim Einsatz von Estern mehrfach ungesättigter Carbonsäuren, die prinzipiell einer mehrfachen Sulfonierungsreaktion zugänglich sind.

In diesem Sachzusammenhang ist es erfindunsgemäß bevorzugt, Estersulfonat-Salze mit einem Molverhältnis von Sulfonat-/Carbonsäure-Rest von maximal etwa 1 (statistisches Mittel) zu verwenden. Es kann dabei aber insbesondere bevorzugt sein, hier niedrigere Werte dieses Molverhältnisses einzusetzen. Auf die angedeutete Weise wird der liphophile Anteil des Estermoleküls gestärkt. Davon kann gezielt zur Ausbildung besonders geeigneter W/O-Emulgatoren Gebrauch gemacht werden. So können beispielsweise Molverhältnisse von Sulfonat-/Carbonsäure-Rest im Bereich von etwa 0,25 bis 0,7 bevorzugt sein. Im Fall der Estersulfonat-Salze auf Basis von Triglycerid liegen die bevorzugten Molverhältnisse der angegebenen Art im Bereich von etwa 0,3 bis 1 (statistisches Mittel), d. h. im Bereich von etwa 1 Sulfonatgruppe pro Molekül bis zu einem Umsatzgrad, der an jedem Carbonsäurerest eine Sulfonatgruppe zuläßt.

Die Herstellung der erfindungsgemäß besonders wichtigen Stoffgruppe der Estersulfonat-Salze auf Basis ungesättigter Mono-, Di- und/oder Triglyceride, die sich von Fettsäuren mit 16 bis 24 C-Atomen und 1 bis 5 Doppelbindungen bei einem Anteil an ungesättigten Fettsäuren von mehr als 50 Gew.-% ableiten, ist in einer verbesserten Ausführungsform im einzelnen Gegenstand der älteren Patentanmeldung P 39 36 001.6 (D 8902) der Anmelderin. Die Offenbarung dieser älteren Anmeldung wird hiermit ausdrücklich auch zum Gegenstand der vorliegenden Erfindungsoffenbarung gemacht. Estersulfonate dieser Art können sich in bevorzugten Ausführungsformen zu mehr als 50 Gew.-% von Ölsäure und/oder Linolsäure ableiten und gehen insbesondere auf ölsäurereiches Rüböl zurück.

In der in der älteren Anmeldung geschilderten Weise - vergleiche hierzu auch J. Falbe (ed) "Surfactants in Consumer Products", Springer Verlag, Berlin-Heidelberg, 1987, Seite 61 gelingt eine weitgehend selektive Einführung von Sulfonatgruppen unter Zurückdrängung der partiell immer mit auftretenden Einführung von Sulfatgruppen im Estermolekül.

Die erfindungsgemäß bevorzugten Emulgatoren auf Basis Estersulfonat-Salz besitzen ein Verhältnis von Sulfonat-/Sulfat-Gruppen von wenigstens 60/40. Höhere Sulfonierungswerte, insbesondere solche oberhalb 70/30 sind bevorzugt. In der Praxis des technischen Verfahrens lassen sich beim Einsatz der geschilderten Esteröle natürlichen und/oder synthetischen Ursprungs Verhältnisse von Sulfonat-/Sulfat-Gruppen im Bereich von etwa 75/25 bis 85/15 ohne unzumutbaren technischen Aufwand einstellen. Estersulfonate dieser Art stellen besonders geeignete Materialien für den großtechnischen Einsatz im Sinne des erfindinngsgemäßen Handelns dar.

Fine wichtige Möglichkeit zur Modifikation der Emulgatoreidenschaften und insbesondere zur Beeinflussung des HLB-Wertes der jeweils vorliegenden Estersulfonat-Salze liegt in der Auswahl der salzbildenden Kationen. Hierdurch kann insbesondere auch die Wasser- bzw. Öllöslichkeit beeinflußt werden. Grundsätzlich gilt, daß wasserlösliche Salze 1-wertiger Kationen, insbesondere die Alkalimetall- und/oder Ammoniumsalze zur Begünstigung des hydrophilen Eigenschaftsbildes führen, während die Verwendung mehrwertiger Kationen die Wasserlöslichkeit reduzieren kann. In Verbindungen dieser Art kann dann der lipophile Charakter stärker zum Tragen kommen, so daß Verbindungen dieser Art besonders zum Einsatz auf dem Gebiet der W/O-Invert-Emulsionen geeignet sind. Mehrwertige Kationen leiten sich insbesondere von den Erdalkalimetallen und dem Aluminium ab. Besondere Bedeutung kommt in dieser Klasse der mehrwertigen Kationen dem Calcium zu, während im Bereich der 1-wertigen Kationen die überwiegende Bedeutung bei Natrium und Ammonium liegt. Es ist ersichtlich, daß die Struktur der erfindungsgemäß ausgewählten Estersulfonat-Salze eine Mehrzahl von gezielt zu beeinflussenden Parametern aufweist, die eine Steuerung der Emulgatorwirkung und damit eine Optimierung der angestrebten Wirkung ermöglichen. Estersulfonat-Salze im Sinne des erfindinngsgemäßen Handelns sind insbesondere in dieser Beziehung weitaus flexibler modifizierbar als die entsprechenden Sulfonatsalze innenständig sulfonierter ungesättigter Monocarbonsäuren natürlichen und/oder synthetischen Ursprungs.

Im praktischen Verfahren besteht dabei die erweiterte Möglichkeit die in-situ-Ausbildung solcher Estersulfonat-Salze mehrwertiger Kationen auszunutzen. An dem nachfolgenden Beispiel sei das verdeutlicht:
Die wäßrige disperse Phase in Öl-basierten Bohrspülungen vom Invert-Typ ist im allgemeinen im praktischen Einsatz mit gelösten Salzen, insbesondere Calciumsalzen wie Calciumchlorid, beladen. Werden solche gelöste Erdalkalisalze enthaltenden wäßrigen Phasen beim Aufbau der Invert-Emulsion verwendet, so entstehen durch in-situ-Ausfällung die entsprechenden Erdalkalisalze der Estersulfonate auch dann, wenn diese Emulgatorkomponenten zunächst in der Form ihrer Natriumsalze eingesetzt werden. Auf diese Weise ist nicht nur eine besonders ökonomische Verwirklichung der erfindinngsgemäßen Lehre möglich, es hat sich gezeigt, daß durch eine solche in-situ-Bildung der insbesondere als W/O-Emulgatoren wirksamen Erdalkali-Salze rheologisch hochstabile Invert-Emulsionen zugänglich sind. Gerade in dem hier dargestellten Fall einer solchen Salzaustauschreaktion wird ersichtlich, daß auch den Kalium-Salzen als Einsatzmaterial besondere Bedeutung zukommen kann: Bei der Umsalzung im zuletzt beschriebenen Sinne entsteht neben den als W/O-Emulgatorenwirksamen Calcium-Salzen das Kaliumchlorid, das in die wäßrige disperse Phase übergeht und hier ein bekannter bevorzugter Bestandteil zur Inhibierinng wasserquellbarer Tone im Rahmen der Erschließung geologischer Vorkommen ist.

Die Emulgatoren auf Estersulfonat-Salzbasis werden in einer bevorzugten Ausführungsform als die wesentlichen Emulsionstyp-bildenden und Emulsions-stabilisierenden Komponenten eingesetzt. Die erfindungsgemäße Lehre erfaßt allerdings auch Mischsysteme, in denen Estersulfonate mit anderen Emulgatorkomponenten zum Einsatz kommen. Bevorzugt sind diese andere Emulgatorkomponenten ihrerseits ökologisch verträglich, verwiesen sei in diesem Zusammenhang beispielsweise auf die ältere Anmeldung P 40 03 028.8 (D 8158) der Anmelderin, in der ausgewählte Emulgatoren auf Etherbasis für Öl-basierte Invert-Emulsionen beschrieben sind. Andere Beispiele für geeignete Co-Emulgatoren sind die in den parallelen Patentanmeldungen ... (D 9222 und D 9223) beschriebenen oberflächenaktiven Alpha-Sulfofettsäure-Disalze und Alkylglycosidverbindungen.

Besonders geeignete Co-Emulgatoren können auch Salze - insbesondere entsprechende Alkali- oder Erdalkali-Salze - von sulfonierten und/oder nicht sulfonierten ungesättigten und/oder gesättigten Fettsäuren natürlichen und/oder synthetischen Ursprungs sein. Die Erfindung umfaßt damit die Zumischung beliebiger Fettsäuren bzw. Fettsäuresalze als Co-Emulgator zu den jeweiligen Wirkstoffmischungen, wobei sich hier insbesondere auch die Mitverwendung ungesättigter, geradkettiger und/oder verzweigter Fettsäuren als problemlos erweist.

Werden solche Emulgatorengemische eingesetzt, dann bilden in bevorzugten Ausführungsformen der Erfindung die Estersulfonat-Salze wenigstens etwa 10 Gew.-%, vorzugsweise wenigstens etwa 50 Gew.-% des jeweiligen Emulgatorsystems.

Die Estersulfonat-Salze können in Mengen von etwa 0,1 bis 10 Gew.-%, bezogen auf die Summe der Flüssigphasen Wasser und Öl, Verwendung finden. Bevorzugte Mengen liegen im Bereich von etwa 0,5 bis 5 Gew.-% der Emulgatorkomponente, wobei dem Bereich von etwa 1 bis 3 Gew.-% des Emulgators - wiederum bezogen auf die Summe von Wasser + Öl - besondere Bedeutung zukommt.

Eine wichtige Erleichterung für die wirtschaftliche Herstellung der erfindungsgemäßen Emulgatoren liegt im Verzicht auf die Bleiche der primär anfallenden Reaktionsprodukte, die nach dem druckschriftlichen Stand der Technik zur Herstellung dieser Emulgatorklasse als wesentlicher Verfahrensschritt angesehen wird. Das Herstellungsverfahren für Estersulfonat-Salze enthaltende Wirkstoffgemische im erfindinngsgemäßen Sinne kann sich dementsprechend auf die Verfahrensstufe der Sulfonierung und Salzbildung einschränken. Das Reaktionsrohprodukt kann unmittelbar der technischen Verwertung zugeführt werden.

In der eingangs besonders herausgestellten bevorzugten Ausführungsform werden die jeweiligen Ölphasen durch die in den zitierten älteren Anmeldungen der Anmelderin beschriebenen ökologisch verträglichen Esteröle, oleophilen Alkohole und/oder Ether gebildet. Unter Einsatz dieser Mittel betrifft die Erfindung dann die im Temperaturbereich von 5 bis 20 °C fließ- und pumpfähigen Bohrlochbehandlungsmittel, insbesondere Bohrspülungen auf Basis
- entweder einer geschlossenen Ölphase, insbesondere in Abmischung mit einer dispersen wäßrigen Phase (W/O-Inverttyp)
- oder einer dispersen Ölphase in einer geschlossenen wäßrigen Phase (O/W-Emulsionstyp)
Die ökologisch verträglichen Öle bzw. Ölphasen decken bezüglich ihrer möglichen physikalischen Beschaffenheit einen breiten Bereich ab. Die Erfindung umfaßt einerseits Ölphasen, die auch bei niederen Temperaturen fließ- und pumpfähig sind. Hier liegen insbesondere Vertreter, die für die Herstellung von W/O-Emuisionen geeignet sind. Aber auch hochviskose bis feste Ölphasen bzw. Materialien dieser Art können im Rahmen der erfindungsgemäßen Lehre mitverwendet werden. Beispielhaft sind hier die folgenden Überlegungen:
Für Wasser-basierte O/W-Emulsionsspülungen ist eine hohe Beweglichkeit der dispersen Ölphase nicht erforderlich, gegebenenfalls sogar nicht einmal erwünscht. Beispielsweise zur Sicherstellung guter Schmiereigenschaften können vergleichsweise viskos eingestellte Ölphasen vorteilhaft sein. Eine andere Möglichkeit des Einsatzes hochviskoser oder gar fester ökologisch verträglicher Ölphasen ist dann gegeben, wenn die jeweils im Fertigprodukt betroffene Ölphase nur anteilsweise aus diesen hochviskosen bis festen Vertretern abbaubarer Ester, Alkohole und/oder Ether gebildet wird, die ihrerseits in Abmischung mit vergleichsweise dünnflüssigen Ölen dieser Art vermischt sind.

Einheitlich gilt allerdings für alle erfindungsgemäß zu verwendenden Ölphasen bzw. Ölmischphasen, daß Flammpunkte von wenigstens etwa 100 °C und vorzugsweise Flammpunkte oberhalb etwa 135 °C aus Sicherheitsgründen im Betrieb gefordert werden. Deutlich darüberliegende Werte, insbesondere solche oberhalb 150 °C können besonders zweckmäßig sein. Einheitlich gilt weiterhin für die verschiedenen potentiell Hydrolyse-gefährdeten Ölphasen, die im erfindungsgemäßen Rahmen eingesetzt werden können, daß das Erfordernis der ökologischen Verträglichkeit nicht nur für die Einsatzverbindung, also beispielsweise das jeweils gewählte Esteröl oder Gemisch von Esterölen erfüllt ist, sondern daß auch bei einer partiellen Verseifung im praktischen Einsatz keine toxikologischen und insbesondere keine inhalations-toxikologischen Gefährdungen ausgelöst werden. Es ist im Rahmen der genannten älteren Anmeldungen ausführlich geschildert, daß hier insbesondere die verschiedenen Vertreter der Esteröle angesprochen sind, wobei hier wiederum monofunktionellen Alkonolen aus der Esterbildung besondere Bedeutung zukommt. Monofunktionelle Alkohole sind im Vergleich zu polyfunktionellen Alkoholen in ihren niederen Gliedern hochflüchtig, so daß durch eine Partialhydrolyse hier sekundäre Gefährdungen auftreten könnten. Bevorzugt sind dementsprechend in den Klassen der verschiedenen Esteröle mitverwendete monofunktionelle Alkohole bzw. die entsprechenden Reste dieser Alkohole so gewählt, daß sie im Molekül wenigstens 6 C-Atome, vorzugsweise wenigstens 8 C-Atome besitzen.

Für Invert-Bohrspülungen der erfindungsgemäß betroffenen Art gilt unabhängig von der bestimmten Beschaffenheit der geschlossenen Ölphase, daß sie in bevorzugten Ausführungsformen eine Plastische Viskosität (PV) im Bereich von etwa 10 bis 60 mPas und eine Fließgrenze (Yield Point YP) im Bereich von 5 bis 40 lb/100 ft² - jeweils bestimmt bei 50 °C - aufweisen.

Als ökologisch verträgliche und bei niederen Temperaturen gut fließfähige Ölphase haben sich insbesondere Esteröle von Monocarbonsäuren erwiesen, die dann in einer bevorzugten Ausführungsform der Erfindung sich aus wenigstens einer der nachfolgenden Unterklassen ableiten:
a) Ester aus C₁₋₅-Monocarbonsäuren und 1- und/oder mehrfunktionellen Alkoholen, wobei Reste aus 1-wertigen Alkoholen wenigstens 6, bevorzugt wenigstens 8 C-Atome aufweisen und die mehrwertigen Alkohole bevorzugt 2 bis 6 C-Atome im Molekül besitzen,
b) Ester aus Monocarbonsäuren synthetischen und/oder natürlichen Ursprungs mit 6 bis 16 C-Atomen, insbesondere Ester entsprechender aliphatisch gesättigter Monocarbonsäuren und 1- und/oder mehrfunktionellen Alkoholen der unter a) genannten Art,
c) Ester olefinisch 1- und/oder mehrfach ungesättigter Monocarbonsäuren mit wenigstens 16, insbesondere 16 bis 24 C-Atomen und insbesondere monofunktionellen geradkettigen und/oder verzweigten Alkoholen.

Ausgangsmaterialien für die Gewinnung zahlreicher in diese Unterklassen fallenden Monocarbonsäuren, insbesondere höherer Kohlenstoffzahl, sind pflanzliche und/oder tierische Öle. Genannt seien Kokosöl, Palmkernöl und/oder Babassuöl, insbesondere als Einsatzmaterialien für die Gewinnung von Monocarbonsäuren des überwiegenden Bereichs bis C₁₈ und von im wesentlichen gesättigten Komponenten. Pflanzliche Esteröle, insbesondere für olefinisch 1- und gegebenenfalls mehrfach ungesättigte Carbonsäuren des Bereichs von C₁₆₋₂₄ sind beispielsweise Palmöl, Erdnußöl, Rizinusöl, Sonnenblumenöl und insbesondere Rüböl. Aber auch synthetisch gewonnene Komponenten sind sowohl auf der Carbonsäureseite als auf der Seite der Alkohole wichtige Strukturelemente für ökologisch verträgliche Ölphasen.

### Additive in der Öl-basierten bzw. Wasser-basierten Spülung

Invert-Bohrspülschlämme enthalten üblicherweise zusammen mit der geschlossenen Ölphase die feindisperse wäßrige Phase in Mengen von etwa 5 bis 50 Gew.-%. In Wasser-basierten Emulsionsspülungen liegt die disperse Ölphase üblicherweise in Mengen von wenigstens etwa 1 bis 2 Gew.-%, häufig in Mengen von wenigstens etwa 5 Gew.-% bei einer Obergrenze des Ölanteils von etwa 40 bis 50 Gew.-% vor - Gew.-% jeweils bezogen auf die Summe der unbeschwerten Flüssiganteile Öl/Wasser.

Neben dem Wassergehalt kommen alle für vergleichbare Spülungstypen vorgesehenen Additive in Betracht. Diese Additive können wasserlöslich, öllöslich und/oder wasser- bzw. öldispergierbar sein.

Übliche Additive sind neben den erfindungsgemäß definierten Emulgatoren beispielsweise fluid-loss-Additive, Strinkturviskosität aufbauende lösliche und/oder unlösliche Stoffe, Alkalireserven, Mittel zur Inhibierung des unerwünschten Wasseraustausches zwischen erbohrten Formationen - z. B Wasser-quellbare Tone und/oder Salzschichten - und der z. B. Wasser-basierten Spülflüssigkeit, Netzmittel zum besseren Aufziehen der emulgierten Ölphase auf Feststoffoberflächen, z. B. zur Verbesserung der Schmierwirkung, aber auch zur Verbesserung des oleophilen Verschlusses freigelegter Gesteinsformationen, bzw. Gesteinsflächen, Biocide, beispielsweise zur Hemmung des bakteriellen Befalls von O/W-Emulsionen und dergleichen. Im einzelnen ist hier auf den einschlägigen Stand der Technik zu verweisen, wie er beispielsweise in der eingangs zitierten Fachliteratur ausführlich beschrieben wird, siehe hierzu insbesondere Gray und Darley, aao., Kapitel 11, "Drilling Fluid Components". Nur auszugsweise sei dementsprechend zitiert:
Feindisperse Zusatzstoffe zur Eröhung der Spülungsdichte: Weit verbreitet ist das Bariumsulfat (Baryt), aber auch Calciumcarbonat (Calcit) oder das Mischcarbonat von Calcium und Magnesium (Dolomit) finden Verwendung.

Mittel zum Aufbau der Strukturviskosität, die gleichzeitig auch als fluid-loss-Additive wirken: In erster Linie ist hier Bentonit bzw. hydrophobierter Bentonit zu nennen. Für Salzwasserspülungen kommt anderen vergleichbaren Tonen, insbesondere Attapulgit und Sepiolith in der Praxis beträchtliche Bedeutung zu.

Auch der Mitverwendung organischer Polymerverbindungen natürlichen und/oder synthetischen Ursprungs kann beträchtliche Bedeutung in diesem Zusammenhang zukommen. Zu nennen sind hier insbesondere Stärke oder chemisch modifizierte Stärken, Cellulosederivate wie Carboxymethylcellulose, Guargum, Xanthangum oder auch rein synthetische wasserlösliche und/oder wasserdispergierbare Polymerverbindungen, insbesondere von der Art der hochmolekularen Polyacrylamidverbindungen mit oder ohne anionische bzw. kationische Modifikation.

Verdünner zur Viskositätsregulierung: Die sogenannten Verdünner können organischer oder anorganischer Natur sein, Beispiele für organische Verdünner sind Tannine und/oder Quebracho-Extrakt. Weitere Beispiele hierfür sind Lignit und Lignitderivate, insbesondere Lignosulfonate. Wie zuvor allerdings angegeben, wird in einer bevorzugten Ausführungsform der Erfindung auf die Mitverwendung toxischer Komponenten gerade hier verzichtet, wobei hier in erster Linie die entsprechenden Salze mit toxischen Schwermetallen wie Chrom und/oder Kupfer zu nennen sind. Ein Beispiel für anorganische Verdünner sind Polyphosphatverbindungen.

Den unerwünschten Wasseraustausch mit beispielsweise Tonen inhibierende Zusatzstoffe: In Betracht kommen hier die aus dem Stand der Technik zu öl- und wasserbasierten Bohrspülungen bekannten Zusatzstoffe. Insbesondere handelt es sich dabei um Halogenide und/oder Carbonate der Alkali- und/oder Erdalkalimetalle, wobei entsprechenden Kaliumsalzen gegebenenfalls in Kombination mit Kalk besondere Bedeutung zukommen kann.

Verwiesen sei beispielsweise auf die entsprechenden Veröffentlichungen in "Petroleum Engineer International", September 1987, 32 - 40 und "World Oil", November 1983, 93 - 97.

Alkalireserven: In Betracht kommen hier auf das Gesamtverhalten der Spülung abgestimmte anorganische und/oder organische Basen, insbesondere entsprechende basische Salze bzw. Hydroxide von Alkali- und/oder Erdalkalimetallen sowie organische Basen. Art und Menge dieser basischen Komponenten sind dabei in bekannter Weise so gewählt und aufeinander abgestimmt, daß die Bohrlochbehandlungsmittel auf einen pH-Wert im Bereich von etwa neutral bis mäßig-basisch, insbesondere auf den Bereich von etwa 7,5 bis 11 eingestellt sind.

Die Menge der jeweils eingesetzten Hilfs- und Zusatzstoffe bewegt sich grundsätzlich im üblichen Rahmen und kann damit der zitierten einschlägigen Literatur entnommen werden.

### Beispiele

In den nachfolgenden Beispielen 1 und 2 werden unter Einhaltung einer Standardrezeptur für Öl-basierte Bohrspülsysteme vom W/O-Typ entsprechende Bohrspülsysteme zusammengestellt, wobei die geschlossene Ölphase jeweils durch einen ausgewählten oleophilen Carbonsäureester der nachfolgenden Definition gebildet ist:
Estergemisch aus im wesentlichen gesättigten Fettsäuren auf Basis Palmkern und 2-Ethylhexanol, das zum weitaus überwiegenden Teil auf C_{12/14}-Fettsäuren zurückgeht und der folgenden Spezifikation entspricht:
- C₈:: 3,5 bis 4,5 Gew.-%
- C₁₀:: 3,5 bis 4,5 Gew.-%
- C₁₂:: 65 bis 70 Gew.-%
- C₁₄:: 20 bis 24 Gew.-%
- C₁₆:: ca. 2 Gew.-%
- C₁₈: : 0,3 bis 1 Gew. -%
Das Estergemisch liegt als hellgelbe Flüssigkeit mit einem Flammpunkt oberhalb 165 °C und einer Viskosität (Brookfield 20 °C) von 7 bis 9 cp vor.

Am ungealterten und am gealterten Material werden die Viskositätskennwerte wie folgt bestimmt:
Messung der Viskosität bei 50 °C in einem Fann-35-Viskosimeter der Fa. Baroid Drilling Fluids Inc.. Es werden in an sich bekannter Weise bestimmt die Plastische Viskosität (PV), die Fließgrenze (YP) sowie die Gelstärke (lb/100 ft²) nach 10 sec. und 10 min.. Bestimmt wird in Beispielen 1 und 2 weiterhin der fluid loss-Wert (HTHP).

Die Alterung der jeweiligen Bohrspülung wird durch Behandlung für den Zeitraum von 16 h bei 125 °C im Autoklaven - im sogenannten Rolleroven - vorgenommen.

Die Bohrspülungssysteme werden gemäß der folgenden Grundrezeptur in an sich bekannter Weise zusammengestellt:
230 ml Carbonsäureester-Öl
26 ml Wasser
6 g organophiler Bentonit (GELTONE der Fa. Baroid Drilling Fluids Inc.)
12 g organophiler Lignit (DURATONE der Fa. Baroid Drilling Fluids Inc.)
2 g Kalk
12 g Emulgator auf Estersulfonatsalz-Basis
346 g Baryt
9,2 g CaCl₂ x 2 H₂O

### Beispiel 1

Ein ungesättigtes C₁₆₋₂₄-Triglycerid auf Rüböl-Basis wird mit gasförmigem SO₃ (ca. 5 Gew.-% SO₃ in Stickstoff oder Luft) im Temperaturbereich von 70 bis 80 °C bei einem Einsatz-Mol-Verhältnis Triglyceridester : SO₃ = 1 : 1,2 zur Umsetzung gebracht. Anschließend erfolgt eine wäßrig alkalische Hydrolyse bis zur pH-Konstanz. Die Produkte werden dann auf einen pH von 6,5 bis 8,5 eingestellt. Es fällt ein wäßriges Konzentrat des niedrigsulfonierten Rübölesters mit den folgenden Kennwerten an:
Aktivsubstanz 39,7 Gew.-%; ungesättigte Anteile 27,1 Gew.-%; Wasser 58,9 Gew.-%; Na₂SO₄ 1,4 Gew.-%
Dieses Reaktionsprodukt wird als "Emulgator auf Estersulfonatsalz-Basis" in der zuvor zitierten Grundrezeptur eingesetzt.

Die am ungealterten und gealterten Material bestimmten Kennzahlen - wie zuvor angegeben - sind in der nachfolgenden tabellarischen Zusammenfassung aufgeführt.

| | Ungealtertes Material | Gealtertes Material |
|---|---|---|
| Plastische Viskosität (PV) | 41 | 48 |
| Fließgrenze (YP) | 4 | 23 |

| Gelstärke (lb/100 ft²) | | |
|---|---|---|
| 10 sec. | 3 | 17 |
| 10 min. | 5 | 36 |
| HTHP 6 ml | | |

### Beispiel 2

Es wird als Emulgator ein Rübölsulfonat eingesetzt, das jetzt jedoch höher sulfoniert worden ist. Im einzelnen gelten hier die folgenden Angaben für die Sulfonierungsstufe: Verhältnis von Triglyceridester : SO₃ = 1 : 3; Verfahrenstemperatur 80 bis 90 °C.

Das wäßrige Sulfonatsalzprodukt, das als "Emulgator" im Rahmen der eingangs angegebenen Grundrezeptur verwendet wird, hat die folgenden Kennzahlen:
Aktivsubstanz 53,9 Gew.-%; Gehalt an ungesättigtem 15,6 Gew.-%; Wasser 44,4 Gew.-%; Na₂SO₄ 1,7 Gew.-%
Die am ungealterten und gealterten Material bestimmten Werte sind wie folgt.

| | Ungealtertes Material | Gealtertes Material |
|---|---|---|
| Plastische Viskosität (PV) | 45 | 52 |
| Fließgrenze (YP) | 8 | 22 |

| Gelstärke (lb/100 ft²) | | |
|---|---|---|
| 10 sec. | 6 | 19 |
| 10 min. | 14 | 33 |
| HTHP 18 ml | | |

### Beispiele 3 und 4

Unter Verwendung der Emulgatoren auf Estersulfonatsalz-Basis der Beispiele 1 und 2 werden W/O-Invertspülsysteme auf Basis eines in der Praxis gebräuchlichen reinen Mineralöls (Handelsprodukt BP 83 HF) gemäß der nachfolgenden Rezeptur in an sich bekannter Weise zusammengestellt.
204 ml Mineralöl
7,2 g Emulgator auf Estersulfonatsalz-Basis
3,6 g Kalk
6 g organophiler Lignit (DURATONE der Fa. Baroid Drilling Fluids Inc.)
3,6 g Co-Emulgator auf Basis C₁₈-Fettsäure
105,6 g wäßrige Calciumchloridlösung (9,2 g CaCl₂ x 2 H₂O)
4,8 g organophiler Bentonit (GELTONE der Fa. Baroid Drilling Fluids Inc.)
216 g Baryt
Im Beispiel 3 wird der vergleichsweise schwächer sulfonierter Emulgator auf Basis Sulforüböl gemäß Beispiel 1 eingesetzt, das Beispiel 4 verwendet den entsprechenden stärker sulfonierten Emulgator auf Sulforüböl-Basis gemäß Beispiel 2.

Die an den nicht gealterten und gealterten Spülsystemen bestimmten Kennwerte sind die folgenden:

### Beispiel 3

| | Ungealtertes Material | Gealtertes Material |
|---|---|---|
| Plastische Viskosität (PV) | 37 | 47 |
| Fließgrenze (YP) | 19 | 10 |

| Gelstärke (lb/100 ft²) | | |
|---|---|---|
| 10 sec. | 9 | 2 |
| 10 min. | 11 | 3 |
| HTHP 7 ml | | |

### Beispiel 4

| | Ungealtertes Material | Gealtertes Material |
|---|---|---|
| Plastische Viskosität (PV) | 40 | 82 |
| Fließgrenze (YP) | 29 | 60 |

| Gelstärke (lb/100 ft²) | | |
|---|---|---|
| 10 sec. | 19 | 18 |
| 10 min. | 29 | 61 |
| HTHP 6 ml | | |

Die am ungealterten und gealterten Material bestimmten Kennwerte sind die folgenden.

| | Ungealtertes Material | Gealtertes Material |
|---|---|---|
| Plastische Viskosität (PV) | 38 | 35 |
| Fließgrenze (YP) | 13 | 10 |

| Gelstärke (lb/100 ft²) | | |
|---|---|---|
| 10 sec. | 7 | 5 |
| 10 min. | 14 | 9 |

### Beispiel 5

In dem nachfolgenden Beispiel 5 wird eine Wasser-basierte Emulsionsspülung unter Einsatz eines komplexen oleophilen Polycarbonsäureesters mit Schmiermittelcharakter als disperse Ölphase gemäß der nachfolgenden Arbeitsanleitung hergestellt:

Zunächst wird unter Einsatz von handelsüblichem Bentonit (nicht hydrophobiert) mit Leitungswasser unter Einstellung eines pH-Wertes von 9,2 bis 9,3 mittels Natronlauge eine 6 Gew.-%ige homogenisierte Bentonitaufschlämmung hergestellt.

Ausgehend von dieser vorgequollenen wäßrigen Bentonitphase werden in aufeinanderfolgenden Verfahrensschritten - jeweils unter intensiver Durchmischung - die einzelnen Komponenten der Wasser-basierten Esteröl-Emulsion gemäß der nachfolgenden Rezeptur eingearbeitet:
350 g 6 Gew.-%ige Bentonitlösung
1,5 g technische Carboxymethylcellulose niedrig-viskos (Relatin U 300 S 9)
35 g Natriumchlorid
70 g Komplex-Ester
6 g Emulgator aus Beispiel 2
219 g Baryt
Als oleophile Esterölphase wird das Umsetzungsprodukt von Trimethylolpropan (14 Gew .-%), einem handelsüblichen Dimerfettsäuregemisch (24 Gew.-%) und zum Rest Ölsäure eingesetzt. Das Dimerfettsäuregemisch enthält zu 77 Gew.-% Dimersäuren und zum Rest tri- und höhere Polycarbonsäuren - hier Gew.-% bezogen auf das Dimerfettsäuregemisch.

An der so hergestellten O/W-Emulsionsspülung werden Viskositätsbestimmungen wie folgt durchgeführt:
Zunächst wird an der Emulsionsspülung bei Raumtemperatur am ungealterten Material die Plastische Viskosität (PV), die Fließgrenze (YP) sowie die Gelstärke nach 10 sec. und nach 10 min. bestimmt.

Anschließend wird die Emulsionsspülung 16 h bei 90 °C unter statischen Bedingungen gealtert, um den Temperatureinfluß auf die Emulsionsstabilität zu überprüfen. Danach werden erneut die Viskositätswerte bei Raumtemperatur bestimmt.

Im einzelnen gilt:

| | Ungealtertes Material | Gealtertes Material |
|---|---|---|
| Plastische Viskosität (PV) | 19 | 18 |
| Fließgrenze (YP) | 99 | 110 |

| Gelstärke (lb/100 ft²) | | |
|---|---|---|
| 10 sec. | 49 | 53 |
| 10 min. | 50 | 56 |

## Patentansprüche

1. Verwendung oberflächenaktiver Salze innenständig sulfonierter und wenigstens überwiegend organisch gebundenen Schwefel aufweisender Ester aus ein- und/oder mehrfach olefinisch ungesättigten Carbonsäuren mit wenigstens 8 C-Atomen und niederen ein- und/oder mehrwertigen Alkoholen (Estersulfonatsalzen) als ökologisch verträgliche Emulgatoren vom W/O-Typ bzw. O/W-Typ in fließ- und pumpfähigen Bohrspülungen oder anderen fließfähigen Bohrlochbehandlungsmitteln, die zusammen mit einer wäßrigen Phase eine geschlossene oder disperse Ölphase aufweisen und für die umweltschonende Erschließung biologischer Lagerstätten, beispielsweise von Erdöl- bzw. Erdgasvorkommen geeignet sind.

2. Ausführungsform nach Anspruch 1, dadurch gekennzeichnet, daß Estersulfonatsalze von ungesättigen Monocarbonsäuren natürlichen und/oder synthetischen Ursprungs mit 10 bis 40 C-Atomen, vorzugsweise des Bereichs C₁₂₋₃₂ und insbesondere Bereichs C₁₆₋₂₄ verwendet werden, wobei insbesondere auch Mischungen unterschiedlicher Carbonsäurereste im Estersulfonatsalz vorliegen können.

3. Ausführungsform nach Ansprüchen 1 und 2, dadurch gekennzeichnet, daß Estersulfonatsalze eingesetzt werden, deren Alkoholkomponente(n) sich von 1- bis 4-wertigen Alkoholen mit vorzugsweise mit bis zu 5 C-Atomen, insbesondere von 1- bis 3-wertigen Alkoholen mit bis zu 3 C-Atomen ableiten.

4. Ausführungsform nach Ansprüchen 1 bis 3, dadurch gekennzeichnet, daß wenigstens anteilsweise Estersulfonatsalze von innenständig sulfierten Mono-, Di- und/oder Triglyceriden natürlichen und/oder synthetischen Ursprungs verwendet werden.

5. Ausführungsform nach Ansprüchen 1 bis 4, dadurch gekennzeichnet, daß Estersulfonatsalze verwendet werden, deren Carbonsäurereste anteilsweise auch auf gesättigte Carbonsäuren zurückgehen, wobei bevorzugt die 1- und/oder mehrfach ungesättigten Carbonsäuren wenigstens etwa 50 Mol-% - bezogen auf Carbonsäuregemisch - ausmachen.

6. Ausführungsform nach Ansprüchen 1 bis 5, dadurch gekennzeichnet, daß Estersulfonatsalze von Mono-, Di- und/oder insbesondere Triglyceriden natürlichen Ursprungs, bevorzugt auf Basis pflanzlicher und/oder tierischer Öle eingesetzt werden.

7. Ausführungsform nach Ansprüchen 1 bis 6, dadurch gekennzeichnet, daß Estersulfonatsalze mit einem Molverhältnis von Sulfonat-/Carbonsäure-Rest von max. etwa 1 (statistisches Mittel) verwendet werden, wobei aber auch niedrigere Werte - z.B. 0,25 bis 0,7 - für dieses Molverhältnis bevorzugt sein können und im Falle der Estersulfonatsalze auf Basis Triglycerid das Molverhältnis insbesondere im Bereich von etwa 0,3 bis 1 liegt.

8. Ausführungsform nach Ansprüchen 1 bis 7, dadurch gekennzeichnet, daß Estersulfonatsalze auf Triglyceridbasis eingesetzt werden, in denen das Verhältnis von Sulfonat-/Sulfat-Gruppen wenigstens etwa 60/40 beträgt und vorzugsweise oberhalb 70/30 und insbesondere im Bereich von etwa 75/25 bis 85/15 liegt.

9. Ausführungsform nach Ansprüchen 1 bis 8, dadurch gekennzeichnet, daß man Estersulfonatsalze auf Basis ungesättigter Mono-, Di- und Triglyceride sowie deren Gemische einsetzt, die sich von Fettsäuren mit 16 bis 24 C-Atomen und 1 bis 5 Doppelbindungen bei einem Anteil an ungesättigten Fettsäuren von mehr als 50 Gew.-% ableiten, wobei Estersulfonatsalze bevorzugt sein können, deren Fettsäurekomponente(n) sich zu mehr als 50 Gew.-% von Ölsäure und/oder Linolsäure ableiten und insbesondere auf ölsäurereiches Rüböl zurückgehen.

10. Ausführungsform nach Ansprüchen 1 bis 9, dadurch gekennzeichnet, daß wasser- und/oder öllösliche Estersulfonatsalze der Alkalimetalle, Erdalkalimetalle und/oder des Ammoniums eingesetzt werden, wobei die Verwendung von entsprechenden Natrium-, Calcium- und/oder Magnesiumsalzen bevorzugt ist und Calciumsalze insbesondere bei der Herstellung und Stabilisierung von W/O-Emulsionen verwendet werden.

11. Ausführungsform nach Ansprüchen 1 bis 10, dadurch gekennzeichnet, daß die Estersulfonatsalze den wenigstens überwiegenden Emulgatoranteil bilden, dabei aber auch zusammen mit anderen, insbesondere biologisch verträglichen W/O- bzw. O/W-Emulgatoren eingesetzt werden können, wobei insbesondere die entsprechenden Salze sulfonierter und/oder nicht-sulfonierter Fettsäuren als Co-Emulgatoren mitverwendet werden können.

12. Ausführungsform nach Ansprüchen 1 bis 11, dadurch gekennzeichnet, daß die Estersulfonatsalze in Mengen von 0,1 bis 10 Gew.-%, vorzugsweise von 0,5 bis 5 Gew.-% und insbesondere in Mengen von etwa 1 bis 3 Gew.-% - Gew.-% jeweils bezogen auf die Summe von Wasser und Öl - eingesetzt werden.

13. Ausführungsform nach Ansprüchen 1 bis 12, dadurch gekennzeichnet, daß die Emulgatoren auf Estersulfonatsalzbasis zusammen mit ökologisch verträglichen Ölphasen zum Einsatz kommen, wobei hier Esteröle von Monocarbonsäuren und/oder Polycarbonsäuren mit 1- und/oder mehrfunktionellen Alkoholen, entsprechende Esteröle der Kohlensäure, oleophile Alkohole und/oder entsprechende Ether bevorzugte Ölphasen sind und dabei insbesondere derart ausgewählt werden, daß im praktischen Einsatz auch unter partieller Esterverseifung keine toxikologischen, insbesondere keine inhalationstoxikologischen Gefährdungen ausgelöst werden.

14. Ausführungsform nach Ansprüchen 1 bis 13, dadurch gekennzeichnet, daß die Estersulfonatsalze zusammen mit Ölphasen bzw. Ölmischphasen eingesetzt werden, die Flammpunkte von wenigstens etwa 100 °C, vorzugsweise oberhalb etwa 135 °C aufweisen.

15. Ausführungsform nach Ansprüchen 1 bis 14, dadurch gekennzeichnet, daß die Emulgatoren auf Estersulfonatsalzbasis in fließ- und pumpfähigen Invert-Systemen mit geschlossenen Ölphasen zum Einsatz kommen, die Erstarrungswerte (Fließ- und Stockpunkt der Ölphase) unterhalb 0 °C, vorzugsweise unterhalb - 5 °C aufweisen und dabei im Temperaturbereich von 0 bis 5 °C eine Brookfield(RVT)-Viskosität nicht über 55 mPas, vorzugsweise nicht über 45 mPas besitzen, während beim Einsatz der Emulgatoren in O/W-Emulsionen die disperse Ölphase bei 20 °C eine Brookfield(RVT)-Viskosität bis etwa 3 Mio. mPas, vorzugsweise bis etwa 1 Mio. mPas besitzen kann.

16. Ausführungsform nach Ansprüchen 1 bis 15, dadurch gekennzeichnet, daß ökologisch unbedenkliche Estersulfonatsalz-Emulgatoren zusammen mit einer Ölphase zum Einsatz kommen, die wenigstens anteilsweise Esteröle von Monocarbonsäuren aus wenigstens einer der nachfolgenden Unterklassen enthält:
a) Ester aus C₁₋₅-Monocarbonsäuren und 1- und/oder mehrfunktionellen Alkoholen, wobei Reste aus 1-wertigen Alkoholen wenigstens 6 , bevorzugt wenigstens 8 C-Atome aufweisen und die mehrwertigen Alkohole bevorzugt 2 bis 6 C-Atome im Molekül besitzen,
b) Ester aus Monocarbonsäuren synthetischen und/oder natürlichen Ursprungs mit 6 bis 16 C-Atomen, insbesondere Ester entsprechender aliphatisch gesättigter Monocarbonsäuren und 1- und/oder mehrfunktionellen Alkoholen der unter a) genannten Art,
c) Ester olefinisch 1 - und/oder mehrfach ungesättigter Monocarbonsäuren mit wenigstens 16, insbesondere 16 bis 24 C-Atomen und insbesondere monofunktionellen geradkettigen und/oder verzweigten Alkoholen.

17. Invert-Bohrspülungen, die für eine umweltfreundliche Erschließung von geologischen Vorkommen geeignet sind und in einer geschlossenen Ölphase eine disperse wäßrige Phase zusammen mit Emulgatoren und üblichen weiteren Hilfsstoffen, beispielsweise Verdickungsmitteln, fluid-loss-Additiven, Beschwerungsmitteln, wasserlöslichen Salzen und Alkalireserven enthalten, dadurch gekennzeichnet, daß sie zusammen mit einer ökologisch verträglichen geschlossenen Ölphase oberflächenaktive Estersulfonatsalze der in Anspruch 1 angegebenen Art als Emulgator bzw. Emulgatorbestandteil enthalten.

18. Invert-Bohrspülungen nach Anspruch 17, dadurch gekennzeichnet, daß sie als ökologisch verträgliche geschlossene Ölphase Esteröle, oleophile Alkohole und/oder entsprechender Ether enthält.

19. Invert-Bohrspülinngen nach Ansprüchen 17 und 18, dadurch gekennzeichnet, daß sie eine Plastische Viskosität (PV) im Bereich von etwa 10 bis 60 mPas und eine Fließgrenze (Yield Point YP) im Bereich von etwa 5 bis 40 lb/100 ft² - jeweils bestimmt bei 50 °C - aufweisen.

20. Invert-Bohrspülungen nach Ansprüchen 17 bis 19, dadurch gekennzeichnet, daß bei der Mitverwendung von Esterölen in der geschlossenen Ölphase, insbesondere entsprechender Ester von Monocarbonsäuren, von Polycarbonsäuren und/oder der Kohlensäure, diese Esteröle wenigstens etwa ein Drittel, vorzugsweise aber den überwiegenden Anteil dieser ökologisch verträglichen Ölphase ausmachen.

21. Invert-Bohrspülungen nach Ansprüchen 17 bis 20, dadurch gekennzeichnet, daß ihr disperser Wasseranteil etwa 5 bis 50 Gew.-%, bevorzugt etwa 10 bis 30 Gew.-% ausmacht und insbesondere Salze von der Art CaCl₂ und/oder KCl gelost enthält.

22. Invert-Bohrspülungen nach Ansprüchen 17 bis 21, dadurch gekennzeichnet, daß die Ölphase des Invert-Schlammes im Temperaturbereich von 0 bis 5 °C eine Brookfield(RVT)-Viskosität unterhalb 50 mPas, vorzugsweise nicht über 40 mPas aufweist.

## Claims

1. Use of surface-active salts of esters from mono- and/or polyolefinically unsaturated carboxylic acids having at least 8 carbon atoms and lower mono- and/or polyhydric alcohols, which esters have been sulfonated in (an) inner position(s) and comprise sulfur that has been organically bonded to an at least predominant degree, (briefly: ester sulfonate salts) as ecologically compatible emulsifiers of the W/O type and/or O/W type in fluid and pumpable drilling fluids and other fluid drilling-hole treatment agents which comprise a continuous or a dispersed oil phase together with an aqueous phase and which are suitable for an environmentally acceptable exploitation of geological resources, for example oil or natural gas deposits.

2. An embodiment according to claim 1, characterized in that ester sulfonate salts of unsaturated monocarboxylic acids of natural and/or synthetic origin comprising from 10 to 40 carbon atoms, preferably comprising the range C₁₂₋₃₂ and especially the range C₁₆₋₂₄, are used while, more specifically, mixtures of various carboxylic acid moieties may be present in the ester sulfonate salt.

3. An embodiment according to claims 1 and 2, characterized in that ester sulfonate salts are employed, the alcohol component(s) of which are derived from mono- to tetrahydric alcohols having preferably up to 5 carbon atoms, and especially from mono- to trihydric alcohols having up to 3 carbon atoms.

4. An embodiment according to claims 1 to 3, characterized in that at least partially ester sulfonate salts are used of mono-, di- and/or triglycerides of natural and/or synthetic origin which have been sulfonated in (an) inner position(s).

5. An embodiment according to claims 1 to 4, characterized in that ester sulfonate salts are used, the carboxylic acid moieties of which are also portion-wise derived from saturated carboxylic acid, while the mono- and/or polyunsaturated carboxylic acids comprise at least 50% by mole - relative to the mixture of carboxylic acids.

6. An embodiment according to claims 1 to 5, characterized in that ester sulfonate salts of mono-, di- and/or especially triglycerides of natural origin, preferably based on vegetable and/or animal oils are used.

7. An embodiment according to claims 1 to 6, characterized in that ester sulfonate salts are used which comprise a maximum molar ratio of sulfonate moiety to carboxylic acid moiety of about 1 (statistic mean value), while lower values - e.g. from 0.25 to 0.7 - may be preferred for said molar ratio and, in the case of the triglyceride-based ester sulfonate salts the molar ratio, more particularly, is within the range of from about 0.3 to 1.

8. An embodiment according to claims 1 to 7, characterized in that triglyceride-based ester sulfonate salts are used wherein the ratio of sulfonate groups to sulfate groups is at least about 60/40 and preferably is above 70/30 and, more particularly, is within the range of from about 75/25 to 85/15.

9. An embodiment according to claims 1 to 8, characterized in that ester sulfonate salts are used which are based on unsaturated mono-, di- and triglycerides as well as mixtures thereof, which have been derived from fatty acids having from 16 to 24 carbon atoms and from 1 to 5 double bonds at a proportion of unsaturated fatty acids of more than 50% by weight, where ester sulfonate salts may be preferred, more of 50% by weight of the fatty acid component(s) of which are derived from oleic acid and/or linoleic acid and more particularly have originated from rapeseed oil rich in oleic acid.

10. An embodiment according to claims 1 to 9, characterized in that water- and/or oil-soluble ester sulfonate salts of the alkali metals, alkaline earth metals and/or ammonium are employed, whereof the use of the respective sodium, calcium and/or magnesium salts is preferred and calcium salts are especially used in the preparation and stabilization of W/O emulsions.

11. An embodiment according to claims 1 to 10, characterized in that the ester sulfonate salts constitute the at least prevailing portion of emulsifier, while they may be also employed together with other, especially with biologically compatible W/O and O/W emulsifiers, respectively, and wherein especially the corresponding salts of sulfonated and/or non-sulfonated fatty acids may be employed as co-emulsifiers.

12. An embodiment according to claims 1 to 11, characterized in that the ester sulfonate salts are employed in amounts of from about 0.1 to 10% by weight, preferably from 0.5 to 5% by weight, and especially in amounts of from about 1 to 3% by weight - weight percentage relative to the sum of water plus oil.

13. An embodiment according to claims 1 to 12, characterized in that the ester sulfonate salt-based emulsifiers are employed in combination with ecologically compatible oil phases, while here ester oils of monocarboxylic acids and/or polycarboxylic acids with mono- and/or polyfunctional alcohols, corresponding ester oils of carbonic acid, oleophilic alcohols and/or corresponding ethers are preferred oil phases and, more particularly, are selected so that in practical use even upon a partial saponification of the esters no toxicological, especially no inhalation-toxicological endangerment will be induced.

14. An embodiment according to claims 1 to 13, characterized in that the ester sulfonate salts are used together with oil phases and mixed oil phases, respectively, exhibiting flash points of at least 100 °C, and preferably in excess of about 135 °C.

15. An embodiment according to claims 1 to 14, characterized in that the ester sulfonate salt-based emulsifiers are employed in fluid and pumpable inverted systems haying a continuous oil phase which have solidification values (pour point and setting point) below 0 °C, and preferably below -5 °C and have a Brookfield (RVT) viscosity at from 0 °C to 5 °C of not more than 55 mPa.s, and preferably of not more than 45 mPa.s, while upon the use of the emulsifiers in O/W emulsions the dispersed oil phase may have a Brookfield (RVT) viscosity at 20 °C of up to about 3,000,000 mPa.s, and preferably of up to about 1,000,000 mPa.s.

16. An embodiment according to claims 1 to 15, characterized in that ecologically acceptable ester sulfonate salt emulsifiers are used together with an oil phase which at least partially contains ester oils of monocarboxylic acids from at least one of the following subclasses:
a) Esters of C₁₋₅-monocarboxylic acids and mono- and/or polyfunctional alcohols, whereof the moieties of monohydric alcohols comprise at least 6 carbon atoms and preferably at least 8 carbon atoms and the polyhydric alcohols preferably have from 2 to 6 carbon atoms in the molecule,
b) Esters of monocarboxylic acids of synthetic and/or natural origin comprising from 6 to 16 carbon atoms, and more specifically esters of aliphatic saturated monocarboxylic acids and mono- and/or polyfunctional alcohols of the kind mentioned in a),
c) Esters of olefinically mono- and/or polyunsaturated monocarboxylic acids having at least 16, and especially 16 to 24 carbon atoms and especially monofunctional straight-chain and/or branched alcohols.

17. Inverted drilling fluids suitable for an environmentally acceptable exploitation of geological resources and comprising, in a continuous oil phase, a dispersed aqueous phase together with emulsifiers and further conventional auxiliary agents such as thickeners, fluid-loss additives, weighting agents, water-soluble salts and/or alkali reserves, characterized in that they contain surface-active ester sulfonate salts is indicated in claim 1 as emulsifier or as an emulsifier component together with an ecologically compatible continuous oil phase.

18. Inverted drilling fluids according to claim 17, characterized in that they contain ester oils, oleophilic alcohols and/or corresponding ethers as the ecologically compatible continuous oil phase.

19. Inverted drilling fluids according to claims 17 and 18, characterized in that they have a plastic viscosity (PV) within the range of from about 10 to 60 mPa.s and a flow limit (yield point, YP) within the range of from about 5 to 40 lb/100 ft² - each determined at 50 °C.

20. Inverted drilling fluids according to claims 17 to 19, characterized in that upon the use, in combination, of ester oils in the continuous oil phase, and more specifically of corresponding esters of monocarboxylic acids, of polycarboxylic esters and/or of carbonic acid, said ester oils comprise at least one third, and preferably the predominant portion of this ecologically compatible oil phase.

21. Inverted drilling fluids according to claims 17 to 20, characterized in that the dispersed water portion thereof comprises about from 5 to 50 % by weight, and preferably about from 10 to 30% by weight, and especially contains salts of the kind of CaCl₂ and/or KCl in the dissolved state.

22. Inverted drilling fluids according to claims 17 to 21, characterized in that the oil phase of the inverted mud has a Brookfield (RVT) viscosity within the range of from 0 °C to 5 °C, below 50 mPa.s, and preferably not higher than 40 mPa.s.

## Revendications

1. Utilisation de sels tensioactifs d'esters à sulfonation non terminale et présentant du soufre lié organiquement au moins de manière prédominante, d'acides carboxyliques une et/ou plusieurs fois insaturés par voie oléfinique, contenant au moins 8 atomes de carbone et d'alcools inférieurs mono- et/ou polyvalents (sels d'esters sulfonates), comme émulsifiants écologiquement compatibles du type eau-dans-l'huile, respectivement du type huile-dans-l'eau, dans des fluides de forage aptes à l'écoulement et au pompage ou dans d'autres agents de traitement de trous de sondage aptes à l'écoulement, qui présentent conjointement avec une phase aqueuse, une phase huileuse fermée ou dispersée et qui sont appropriés pour la reconnaissance de gisements biologiques, respectueuse de l'environnement, par exemple de gisements de pétrole ou de gaz naturel.

2. Forme de réalisation selon la revendication 1, caractérisée en ce qu'on utilise des sels d'esters sulfonates d'acides monocarboxyliques insaturés à'origine naturelle et/ou synthétique contenant de 10 à 40 atomes de carbone, de préférence du domaine de C₁₂-C₃₂, et en particulier du domaine de C₁₆-C₂₄, dans laquelle, en particulier des mélanges de résidus différents d'acides carboxyliques peuvent également être présents dans le sel d'ester sulfonate.

3. Forme de réalisation selon les revendications 1 et 2, caractérisée en ce qu'on met en oeuvre des sels d'esters sulfonates dont le ou les composants alcools dérivent d'alcools mono- à quadrivalents, contenant de préférence jusqu'à 5 atomes de carbone, en particulier d'alcools mono- à trivalents contenant jusqu'à 3 atomes de carbone.

4. Forme de réalisation selon les revendications 1 à 3, caractérisée en ce qu'on utilise au moins pour une part des sels d'esters sulfonates de mono-, di- et/ou triglycérides à sulfuration non terminale, d'origine naturelle et/ou synthétique.

5. Forme de réalisation selon les revendications 1 à 4, caractérisée en ce qu'on utilise des sels d'esters sulfonates dont les résidus d'acides carboxyliques proviennent pour une part également d'acides carboxyliques saturés, dans laquelle de préférence les acides carboxyliques une et/ou plusieurs fois insaturés représentent au moins environ 50 moles %, rapportés au mélange d'acides carboxyliques.

6. Forme de réalisation selon les revendications 1 à 5, caractérisée en ce qu'on met en oeuvre des sels d'esters sulfonates de mono-, di- et/ou, en particulier triglycérides d'origine naturelle, de préférence à base d'huiles végétales et/ou animales.

7. Forme de réalisation selon les revendications 1 à 6, caractérisée en ce qu'on utilise des sels d'esters sulfonates ayant un rapport molaire résidu sulfonate/acide carboxylique de maximum environ 1 (moyenne statistique), mais dans laquelle également des valeurs inférieures - par exemple, de 0,25 à 0,7 - peuvent être préférées pour ce rapport molaire et, dans le cas des sels d'esters sulfonates à base de triglycérides, le rapport molaire se situe en particulier dans le domaine d'environ 0,3 à 1.

8. Forme de réalisation selon les revendications 1 à 7, caractérisée en ce qu'on met en oeuvre des sels d'esters sulfonates à base de triglycérides, dans lesquels le rapport groupes sulfonates/groupes sulfates s'élève au moins à environ 60/40, et se situe de préférence au-delà de 70/30 et, en particulier dans le domaine d'environ 75/25 à 85/15.

9. Forme de réalisation selon les revendications 1 à 8, caractérisée en ce qu'on met en oeuvre des sels d'esters sulfonates à base de mono-, di- et triglycérides insaturés, ainsi que de leurs mélanges, qui dérivent d'acides gras contenant de 16 à 24 atomes de carbone et de 1 à 5 doubles liaisons pour une fraction d'acides gras insaturés de plus de 50% en poids, dans laquelle on peut préférer des sels d'esters sulfonates dont le ou les composants d'acides gras dérivent à concurrence de plus de 50% en poids de l'acide oléique et/ou de l'acide linoléique, et en particulier proviennent de l'huile de colza riche en acide oléique.

10. Forme de réalisation selon les revendications 1 à 9, caractérisée en ce qu'on met en oeuvre des sels d'esters sulfonates solubles dans l'eau et/ou dans l'huile, de métaux alcalins, de métaux alcalino-terreux ou d'ammonium, dans laquelle l'utilisation de sels de sodium, de calcium et/ou de magnésium correspondants est préférée et on utilise les sels de calcium en particulier lors de la préparation et de la stabilisation d'émulsions eau-dans-l'huile.

11. Forme de réalisation selon les revendications 1 à 10, caractérisée en ce que les sels d'esters sulfonates forment la fraction d'émulsifiant au moins prédominante, tout en pouvant en l'occurrence être également mis en oeuvre conjointement avec d'autres émulsifiants eau-dans-l'huile, respectivement huile-dans-l'eau, en particulier biocompatibles, dans laquelle en particulier on peut utiliser conjointement les sels correspondant d'acides gras sulfonés et/ou non sulfonés comme co-émulsifiants.

12. Forme de réalisation selon les revendications 1 à 11, caractérisée en ce qu'on met en oeuvre les sels d'esters sulfonates dans des quantités de 0,1 à 10% en poids, de préférence de 0,5 à 5% en poids et, en particulier, dans des quantités d'environ 1 à 3% en poids, les % en poids étant chaque fois rapportés à la somme de l'eau et de l'huile.

13. Forme de réalisation selon les revendications 1 à 12, caractérisée en ce qu'on met en oeuvre les émulsifiants à base de sels d'esters sulfonates conjointement avec des phases huileuses écologiquement compatibles, dans laquelle en l'occurrence des huiles estérifiées d'acides monocarboxyliques et/ou d'acides polycarboxyliques avec des alcools mono- et/ou polyfonctionnels, des huiles estérifiées correspondantes de l'acide carbonique, des alcools oléophiles et/ou des éthers correspondante sont des phases huileuses préférées et en l'occurrence, sont choisies en particulier de telle sorte que, dans l'utilisation pratique, même en cas de saponification partielle de l'ester, on ne fait courir aucun risque toxicologique, en particulier aucun risque toxicologique par inhalation.

14. Forme de réalisation selon les revendications 1 à 13, caractérisée en ce qu'on met en oeuvre les sels d'esters sulfonates conjointement avec des phases huileuses, respectivement des phases huileuses mixtes qui présentent des pointe d'inflammation d'au moins environ 100°C, de préférence supérieurs à environ 135°C.

15. Forme de réalisation selon les revendications 1 à 14, caractérisée en ce qu'on met en oeuvre les émulsifiants à base de sels d'esters sulfonates dans des systèmes inversés aptes à l'écoulement et/ou au pompage avec des phases huileusee fermées, qui présentent des points de solidification (limite d'écoulement et point de figeage de la phase huileuse) inférieurs à 0°C, de préférence inférieurs à -5°C et possèdent en l'occurrence, dans le domaine de températures de 0 à 5°C, une viscosité de Brookfield (RVT) qui n'est pas supérieure à 55 mPa.s, de préférence qui n'est pas supérieure à 45 mPa.s, tandis que, lorsqu'on utilise les émulsifiants dans des émulsions huile-dans-l'eau, la phase huileuse dispersée peut posséder à 20°C une viscosité de Brookfield (RVT) allant jusqu'à environ 3 millions de mPa.s, de préférence jusqu'à environ 1 million de mPa.s.

16. Forme de réalisation selon les revendications 1 à 15, caractérisée en ce qu'on utilise des émulsifiants de sels d'esters sulfonates écologiquement acceptables, conjointement avec une phase huileuse qui contient au moins pour une part des huiles estérifiées d'acides monocarboxyliques d'au moins une des sous-classes ci-après :
a) des esters d'acides monocarboxyliques en C₁-C₅ et d'alcools mono- et/ou polyfonctionnels, dans lesquels des radicaux d'alcools monovalents présentent au moins 6, de préférence au moins 8 atomes de carbone, et des alcools polyvalents possèdent de préférence de 2 à 6 atomes de carbone par molécule;
b) des esters d'acides monocarboxyliques d'origine synthétique ou naturelle contenant de 6 à 16 atomes de carbone, en particulier des esters d'acides monocarboxyliques aliphatiques saturés correspondants et d'alcools mono- et/ou polyfonctionnels du type mentionné sous a);
c) des esters une et/ou plusieurs fois insaturés par voie oléfinique d'acides monocarboxyliques contenant au moins 16, en particulier de 16 à 24 atomes de carbone, et d'alcools à chaînes droites et/ou ramifiées, en particulier monofonctionnels.

17. Fluides de forage inversés qui sont appropriés pour une reconnaissance respectueuse de l'environnement de gisements géologiques et qui contiennent, dans une phase huileuse fermée, une phase aqueuse dispersée conjointement avec des émulsifiants et d'autres adjuvants habituels, par exemple des épaississants, des réducteurs de filtrats, des matières de charge, des sels hydrosolubles et des réserves alcalines, caractérisés en ce qu'ils contiennent, conjointement avec une phase huileuse fermée écologiquement acceptable, des sels tensioactifs d'esters sulfonates du type indiqué dans la revendication 1 comme émulsifiants, respectivement comme constituants d'émulsifiants.

18. Fluides de forage inversés selon la revendication 17, caractérisés en ce qu'ils contiennent comme phase huileuse fermée écologiquement acceptable, des huiles estérifiées, des alcools oléophiles et/ou des éthers correspondants.

19. Fluides de forage inversés selon les revendications 17 et 18, caractérisés en ce qu'ils présentent une viscosité plastique (PV) dans le domaine d'environ 10 à 60 mPa.s et une limite d'écoulement (Yield Point YP) dans le domaine d'environ 5 à 40 livres/100 pieds² chaque fois déterminé à 50°C.

20. Fluides de forage inversés selon les revendications 17 à 19, caractérisés en ce que, lors de l'utilisation conjointe d'huile estérifiée dans la phase huileuse fermée, en particulier d'esters correspondants d'acides monocarboxyliques, d'acides polycarboxyliques et/ou de l'acide carbonique, ces huiles estérifiées représentent au moins environ un tiers, mais de préférence la fraction prédominante de cette phase huileuse écologiquement acceptable.

21. Fluides de forage inversés selon les revendications 17 à 20, caractérisés en ce que leur fraction dispersée en eau représente d'environ 5 à 50% en poids, de préférence d'environ 10 à 30% en poids, et contient sous forme dissoute en particulier des sels du type CaCl₂ et/ou KCl.

22. Fluides de forage inversés selon les revendications 17 à 21, caractérisés en ce que la phase huileuse de l'émulsion inversée présente dans le domaine de température de 0 à 5°C, une viscosité de Brookfield (RVT) inférieure à 50 mPa,s, de préférence qui n'est pas supérieure à 40 mPa.s.
